Europäisches Patentamt

European Patent Office

Office européen des brevets

(11) Veröffentlichungsnummer: **0 282 909 B1**

(12) **EUROPÄISCHE PATENTSCHRIFT**

(45) Veröffentlichungstag der Patentschrift: **30.12.92**

(21) Anmeldenummer: **88103786.5**

(22) Anmeldetag: **10.03.88**

Die Akte enthält technische Angaben, die nach dem Eingang der Anmeldung eingereicht wurden und die nicht in dieser Patentschrift enthalten sind.

(51) Int. Cl.5: **C08J 7/04**, B05D 1/02, C09D 5/24

(54) **Formkörper mit permanent antielektrostatischer Ausrüstung.**

(30) Priorität: **18.03.87 DE 3708706**

(43) Veröffentlichungstag der Anmeldung:
**21.09.88 Patentblatt 88/38**

(45) Bekanntmachung des Hinweises auf die Patenterteilung:
**30.12.92 Patentblatt 92/53**

(84) Benannte Vertragsstaaten:
**BE DE FR GB NL**

(56) Entgegenhaltungen:
**EP-A- 0 134 178**
**DE-B- 1 250 312**
**GB-A- 1 234 954**
**GB-A- 2 144 138**
**US-A- 3 576 662**

(73) Patentinhaber: **BASF Aktiengesellschaft**
**Carl-Bosch-Strasse 38**
**W-6700 Ludwigshafen(DE)**

(72) Erfinder: **Muenstedt, Helmut, Dr.**
**An dem Altenbach 41**
**W-6706 Wachenheim(DE)**
Erfinder: **Gebhard, Helmut**
**Bismarckstrasse 9**
**W-6737 Boehl-Iggelheim(DE)**
Erfinder: **Blinne, Gerd, Dr.**
**Im Woogtal 7**
**W-6719 Bobenheim(DE)**

**Beschreibung**

Die Erfindung betrifft lichtdurchlässige (transparente) Formkörper auf der Basis von thermoplastischen Polymeren mit permanent antielektrostatischer Ausrüstung in Form von Ruß, der in den Formkörper oberflächlich eingelagert ist und ein Perkolationsnetzwerk bildet, wie er erhältlich ist durch Aufsprühen oder Aufspritzen einer 1 bis 20-gewichtsprozentigen Lösung des den Formkörper bildenden thermoplastischen Polymeren, welche 0,05 bis 4 Gew.% Ruß dispergiert enthält, wobei das Gewichtsverhältnis von thermoplastischem Polymeren zu Ruß in der Lösung im Bereich von 1:1 bis 50:1 liegt.

Außerdem betrifft die Erfindung ein Verfahren zur permanent antielektrostatischen Ausrüstung von Formkörpern auf der Basis von lichtdurchlässigen thermoplastischen Polymeren.

Die elektrisch leitfähige Ausrüstung nicht leitender Kunststoff-Formkörper hat große anwendungstechnische Bedeutung.

Abschirmungen gegenüber elektromagnetischen Wellen und permanent antielektrostatische Ausrüstungen sind zwei Forderungen, deren technische Lösung bei der Verwendung von Kunststoffen oft gefordert wird.

Zur antistatischen Ausrüstung von Kunststoffoberflächen sind Leitlacke im Handel erhältlich. Diese bieten darüber hinaus schon in dünnen Schichten eine gute Abschirmwirkung gegen elektromagnetische Wellen. Meistens enthalten diese Leitlacke als elektrisch leitfähige Komponente Silber und haben daher einen hohen Preis. Die aufgebrachten Schichten sind in der Regel lichtundurchlässig. Speziell zur Herstellung von antistatischen Folien oder Platten aus PVC, die verklebt werden sollen, ist z.B. in der DE-A- 1 250 312 vorgeschlagen worden, die spätere Klebeseite mit einem leitfähigen Überzug zu versehen, der Ruß enthält und natürlich ebenfalls undurchsichtig ist.

Weiterhin ist es bekannt, Kunststoffe durch Zugabe von Additiven, deren Wirksamkeit auf Absorption von Wasser, das durch Ionenbildung einen leitfähigen Oberflächenfilm bildet, beruht, antistatisch auszurüsten. Ein Nachteil dieses Verfahrens besteht darin, daß die antistatische Wirkung mit kleiner werdender Luftfeuchte abnimmt, d.h. es ist keine permanente antielektrostatische Ausrüstung gegeben. Darüber hinaus zeigen die meist oligomeren Additive häufig Diffusionseffekte, die ein Wandern der Additive an die Oberfläche des Formteils bewirken. Dort können sie abgelöst werden und tragen somit nicht mehr zur antielektrostatischen Wirkung bei.

Durch Zugabe von Metallpulvern oder anderen elektrisch leitfähigen Materialien wie Ruß und Kohlenstoff-Fasern kann bei genügend hoher Konzentration auch eine antielektrostatische Ausrüstung erreicht werden.

Derartige Materialien sind auch auf dem üblichen Verarbeitungswege für thermoplastische bzw. duroplastische Polymere verarbeitbar. Der Nachteil dieser Produkte liegt jedoch darin, daß mit wachsendem Füllstoffgehalt die mechanischen Eigenschaften in der Regel stetig schlechter werden und die antielektrostatische Ausrüstung nach diesen Verfahren zu einer Schwärzung des Materials führt, die in vielen Fällen unerwünscht ist.

Gemäß der Lehre der EP-A 34 300 werden in Lösungen von amorphen Polymeren leitfähige Charge-Transfer-Komplexe eingearbeitet, welche in Form eines zusammenhängenden Netzwerkes dispergiert sind. Nachteilig ist bei diesen Produkten, daß durch mechanische Beanspruchung das Netzwerk zerstört wird und damit die Leitfähigkeit sinkt. Darüber hinaus ist die Leitfähigkeit der Charge-Transfer-Komplexe unter natürlichen Umweltbedingungen nicht über längere Zeit stabil.

Der Erfindung lag die Aufgabe zugrunde, Formkörper aus durchsichtigen thermoplastischen Polymeren mit permanent antielektrostatischer Ausrüstung zur Verfügung zu stellen, die die Transparenz möglichst wenig beeinflußt.

Eine weitere Aufgabe der Erfindung bestand darin, ein Verfahren zur permanent antielektrostatischen Ausrüstung von Formkörpern anzugeben.

Erfindungsgemäß wird diese Aufgabe durch die eingangs definierten Formkörper gelöst.

Unter Formkörpern sollen prinzipiell alle transparenten geformten Teile aus thermoplastischen Polymeren verstanden werden. Dies sind z.B. Fasern, Folien, Fertigteile, Klappen und Gehäuse.

Als Thermoplaste eignen sich grundsätzlich alle Polymeren, die in der Schmelze thermoplastisch verarbeitbar sind. Als Beispiele seien hier Polyolefine, Polystyrol, Polyamide, Polyester, Polyethersulfone, Polyetherketone, Polycarbonate, Polyphenylenether sowie schlagzäh modifizierte Copolymere aus vinylaromatischen Monomeren, gegebenenfalls mit Kautschuk modifiziert, wie die sogenannten ABS- und ASA-Kunststoffe genannt.

Als spezielle Beispiele seien Polyethylen, Polypropylen, Polystyrol, Poly- $\alpha$-methylstyrol, schlagzäh modifiziertes Polystyrol, Polycaprolactam, Polyhexamethylenadipinamid, Polyethylenterephthalat, Polybutylenterephthalat, Polyethersulfone aus 4,4'-Dihydroxydiphenylsulfon und 4,4'-Dichlordiphenylsulfon, Polyethersulfone auf der Basis von Bisphenol-A und 4,4'-Dichlordiphenylsulfon sowie Mischungen und Copolymere dieser Polyethersulfone, Polycarbonate auf der Basis von Bisphenol-A und Acrylnitril-Butadien-Styrol (ABS)-Polymere bzw. mit Acrylatkautschuk modifizierte Styrol-Acrylnitril-Copolymere (ASA) aufgeführt.

Zur Herstellung der erfindungsgemäßen Formkörper wird vorteilhaft eine 1 bis 20 gew.%ige Lösung des den Formkörper bildenden thermoplastischen Polymeren hergestellt, 0,05 bis 4 Gew.% Ruß darin dispergiert, wobei das Gewichtsverhältnis von thermoplastischem Polymeren zu Ruß im Bereich von 1:1 bis 50:1, vorzugsweise 2:1 bis 25:1, liegt, die erhaltene Lösung bzw. Dispersion durch Sprühen oder Spritzen auf die Oberfläche des Formkörpers aufgebracht und das Lösungsmittel entfernt.

Nach Aufbringen der Lösung bzw. Dispersion und der Entfernung des Lösungsmittels bildet der Ruß ein sog. Perkolationsnetzwerk in der Oberflächenschicht des Formkörpers aus, d.h. die Ruß-Teilchen berühren sich. Dieses Netzwerk ist zu einem hohen Grad lichtdurchlassig, d.h. bei transparenten Formkörpern bleibt die Transparenz auch nach der antielektrostatischen Ausrüstung erhalten.

Es versteht sich, daß je nach Art des thermoplastischen oder Polymeren, welches den Formkörper bildet, unterschiedliche Lösungsmittel zur Herstellung der Lösungen verwendet werden. Entsprechende Lösungsmittel für die verschiedenen Thermoplasten sind bekannt und beschrieben. Nur beispielsweise sei hier als Lösungsmittel für Polyarylethersulfone und Polycarbonate N-Methylpyrrolidon genannt. Die Konzentration des thermoplastischen Polymeren, welches den Formkörper bildet, bestimmt die Viskosität der Lösung. Da die Viskosität einen Einfluß auf das Verfahren hat, nach welchem die Lösung nach Einbringen des elektrisch leitfähigen Füllstoffs auf die Formkörper aufgebracht werden, wird die Konzentration so gewählt, daß sich nach Zugabe des elektrisch leitfähigen Füllstoffs eine Lösung oder Dispersion mit einer Viskosität ergibt, die mit einer Sprüheinrichtung, insbesondere einer Spritzpistole, auf die Formkörperoberfläche aufgebracht werden kann.

Es versteht sich, daß somit die Konzentration der Lösung auch von der Art des thermoplastischen Polymeren abhängt.

Unter Berücksichtigung der vorstehenden Voraussetzungen beträgt die Konzentration der Lösungen an thermoplastischem Polymer 1 bis 20, vorzugsweise 2 bis 15 und insbesondere 3 bis 10 Gew.%.

In die Lösung des thermoplastischen Polymeren, das die Formkörper bildet, werden 0,05 bis 4 Gew.% Ruß eingebracht. Dabei liegt das Gewichtsverhältnis von thermoplastischem Polymer zum Ruß in der Lösung bzw. Dispersion im Bereich von 1:1 bis 50:1, vorzugsweise 2:1 bis 25:1 und insbesondere 5:1 bis 20:1.

Der Gewichtsanteil des Rußes, bezogen auf das Gesamtgewicht der Losung, beträgt 0,05 bis 4, insbesondere 0,1 bis 3 und besonders bevorzugt 0,1 bis 2 Gew.%.

Als elektrisch leitfähige Füllstoffe eignen sich vorzugsweise feinteilige Füllstoffe mit einer mittleren Teilchengröße (Zahlenmittelwert) von 0,01 bis 1 $\mu$m, insbesondere von 0,05 bis 0,5 $\mu$m. Als Beispiele seien hier nur Metallpulver und Ruß genannt, von denen letzterer besonders bevorzugt wird.

Verschiedene Handelssorten von Ruß, die zur antielektrostatischen Ausrüstung von Kunststoffen verwendet werden, sind im Handel erhältlich.

Erfindungsgemäß wird die Lösung bzw. Dispersion auf die Oberfläche des Formkörpers durch Sprühen oder Spritzen, d.h. mit Hilfe einer Sprüheinrichtung, insbesondere einer Spritzpistole aufgebracht. Dazu wird - wie bereits beschrieben - die Viskosität der aufzubringenden Lösung entsprechend eingestellt.

Bei der Aufbringung mit Hilfe einer Spritzpistole lassen sich auf der Oberfläche der Formkörper so dünne Schichten zu antielektrostatischen Ausrüstungen aufbringen, daß diese Schichten weitgehend transparent bleiben. Dies hat zur Folge, daß bei Verwendung von an sich bereits transparenten Formkörpern, z.B. aus Polvarylethersulfonen, Polycarbonaten oder Polymethylmethacrylat die Transparenz durch die auf der Oberfläche aufgebrachte antielektrostatische Ausrüstung nicht wesentlich beeinträchtigt wird.

Diese Tatsache stellt für die Verwendung der erfindungsgemäßen Formkörper auf dem Verpackungssektor einen erheblichen anwendungstechnischen Vorteil dar, da es möglich ist, den Inhalt der Verpackung zu überprüfen, ohne diese zu öffnen. Als Beispiel sei hier die Verpackung empfindlicher elektronischer Bauteile genannt.

Außerdem weisen die erfindungsgemäßen Formkörper mit permanent antielektrostatischer Ausrüstung eine praktisch nahezu unbegrenzt stabile elektrische Leitfähigkeit hei Warmebelastungen bis zur Erweichungstemperatur des Kunststoffs auf. Darüber hinaus hängt die Leitfähigkeit nicht, wie bei den meisten der herkömmlich antielektrostatisch ausgerüsteten Formkörper von der Luftfeuchtigkeit ab.

Die elektrische Leitfähigkeit der erfindungsgemäßen Formkörper liegt im allgemeinen im Bereich von $10^{-3}$ bis $10^{-9}$, insbesondere von $10^{-4}$ bis $10^{-8}$ S/cm. Die zur Abschirmung elektromagnetischer Wellen in der Regel erforderliche höhere Leitfähigkeit kann gegebenenfalls durch Erhöhung der Rußmenge oder durch mehrmaliges Aufbringen erreicht werden.

Die erfindungsgemäßen Formkörper eignen sich daher insbesondere zur Anwendung auf dem Verpackungssektor (vor allem für elektronische Bauelemente) und zur Abschirmung elektromagnetischer Wellen.

Ein weiteres Anwendungsgebiet sind z.B. Heizfolien, die insbesondere bei Verwendung von hochtemperaturbeständigen thermoplastischen oder duroplastischen Polymeren auch bei höheren Temperaturen eingesetzt werden können.

Beispiel

Zur Herstellung der Lösung, die auf die Oberfläche des Formkörpers aufgebracht worden sollte, wurden 15 Gew.% eines Polyarylethersulfons auf der Basis von 2,2-Di(4-hydroxyphenyl)propan und 4,4'-Dichlordiphenylsulfon mit einem Gewichtsmittelwert des Molekulargewichts von 40 000 hergestellt.

Dieser Lösung wurden 0,75 Gew.% Ruß (Typ Ketjen-Black EP-DJ 600), bezogen auf das Gesamtgewicht der Losung, zugesetzt. Dies erfolgte mit Hilfe einer schnellaufenden Rührvorrichtung und anschließendem Behandeln im Ultraschallbad.

Anschließend wurde die Lösung auf einen Polyethersulfongehalt von 5 Gew.% verdünnt, so daß die Viskosität soweit herabgesetzt wurde, daß die Lösung mit einer herkömmlichen Spritzpistole verarbeitet werden konnte.

Als Formkörper wurden 2 mm dicke Platten aus dem auch in der Lösung enthaltenen Polyarylethersulfon eingesetzt, die ein- bzw. zwei-mal mit Hilfe einer Spritzpistole mit der Lösung bespritzt wurden.

In beiden Fällen erhielt man transparente Beschichtungen mit Leitfähigkeiten im Bereich von $10^{-6}$ bis $10^{-8}$ S/m, die für eine antielektrostatische Ausrüstung vollkommen ausreichen.

Lichtmikroskopische Aufnahmen der Oberflächen der ausgerüsteten Platten zeigten, daß die Rußpartikel ein Netzwerk bildete, über welches die Leitfähigkeit erfolgte. Die Leitfähigkeit, nahm mit der Dichte der Rußpartikel zu.

Die auf diese Weise aufgebrachten antielektrostatischen Schichten waren sehr kratzfest, was darauf zurückzuführen ist, daß die Rußpartikel nicht direkt auf der Oberfläche des Formkörpers aufgebracht sind, sondern in einer Oberflächenschicht eingelagert sind.

Zur Überprüfung der Langzeitstabilität wurde eine zweimal bespritzte Platte bei 80°C über längere Zeiträume gelagert; nach 30 Tagen hatte die Leitfähigkeit um etwa 20 % abgenommen, danach war kein weiterer Abfall mehr zu erkennen.

## Patentansprüche

1. Lichtdurchlässiger thermoplastischer Formkörper mit permanent antielektrostatischer Ausrüstung auf der Grundlage von Ruß, der in den Formkörper oberflächlich eingelagert ist und ein Perkolationsnetzwerk bildet, erhältlich durch Aufsprühen oder Aufspritzen einer 1 bis 20 gew.-%igen Lösung des den Formkörper bildenden thermoplastischen Polymeren, welche 0,05 bis 4 Gew.-% Ruß dispergiert enthält, wobei das Gewichtsverhältnis von thermoplastischem Polymeren zu Ruß in der Lösung im Bereich von 1:1 bis 50:1 liegt.

2. Verfahren zur permanent antielektrostatischen Ausrüstung von transparentem thermoplastischen Formkörpern, dadurch gekennzeichnet, daß man

   (a) eine 1 bis 20 gew.-%ige Lösung des thermoplastischen Polymeren, welches den Formkörper bildet, herstellt,
   (b) in dieser Lösung 0,05 bis 4 Gew.-% Ruß dispergiert, wobei das Gewichtsverhältnis von thermoplastischem Polymeren zu Ruß im Bereich von 1:1 bis 50:1 liegt,
   (c) die erhaltene Lösung bzw. Dispersion durch Sprühen oder Spritzen auf die Oberfläche des Formkörpers aufbringt und
   (d) das Lösungsmittel entfernt.

3. Verfahren nach Anspruch 2, dadurch gekennzeichnet, daß man als Sprüheinrichtung eine Spritzpistole verwendet,

## Claims

1. A shaped transparent thermoplastic article having a permanent antielectrostatic finish based on carbon black embedded in the surface of the article and forming a percolation network, obtainable by spraying with a from 1 to 20 % by weight solution of the thermoplastic polymer of which the article is composed containing from 0.05 to 4 % by weight of carbon black in dispersion, the weight ratio of thermoplastic polymer to carbon black in the solution being within the range from 1:1 to 50:1.

2. A process for conferring a permanent antielectrostatic finish on shaped transparent thermoplastic articles, which comprises

   (a) preparing a from 1 to 20 % by weight solution of the thermoplastic polymer of which the article is composed,
   (b) dispersing from 0.05 to 4 % by weight of carbon black in this solution so that the weight ratio of thermoplastic polymer to carbon black in this solution is within the range from 1:1 to 50:1,
   (c) spraying the resulting solution or dispersion onto the surface of the article, and
   (d) removing the solvent.

3. A process as claimed in claim 2, wherein the spraying is effected using a spraygun.

## Revendications

1. Articles moulés thermoplastiques, transparents, avec apprêt antiélectrostatique permanent à base de noir de carbone qui est incorporé superficiellement aux articles moulés et forme un réseau de percolation, que l'on peut obtenir par projection ou pulvérisation d'une solution à 1 à 20% en poids du polymère thermoplastique formant les articles moulés, qui contient de 0,05 à 4% en poids de noir de carbone en dispersion, où le rapport pondéral du polymère thermoplastique au noir de carbone dans la solution varie de 1:1 à 50:1.

2. Procédé pour l'apprêtage antiélectrostatique permanent d'articles moulés themoplastiques, transparents, caractérisé en ce que

(a) on prépare une solution à 1 à 20% en poids du polymère thermoplastique qui forme les articles moulés,

(b) on disperse de 0,05 à 4% en poids de noir de carbone dans cette solution, où le rapport pondéral du polymère thermoplastique au noir de carbone varie de 1:1 à 50:1,

(c) on applique la dispersion ou la solution obtenue par projection ou pulvérisation sur la surface des articles moulés et

(d) on élimine le solvant.

3. Procédé suivant la revendication 2, caractérisé en ce que l'on utilise un pistolet de pulvérisation à titre d'instalaltion de projection.